# EUROPEAN PATENT APPLICATION

(11) **EP 4 811 650 A1**
(43) Date of publication of application: **23.09.2026**
(21) Application number: 24891017.6
(22) Date of filing: 16.07.2024
(51) Int. Cl.: H02P 29/024

(54) **DRIVE DEVICE, DRIVE SYSTEM, DETERMINATION METHOD, PROGRAM, AND COMPUTER-READABLE NON-TRANSITORY STORAGE MEDIUM**

(30) Priority: 17.11.2023 JP 2023196076
(71) Applicant: SMC Corporation, Tokyo 104-0031 (JP)
(72) Inventor: SAKAMURA, Miki, Kashiwa-shi, Chiba 277-0871 (JP)
(74) Representative: Keil & Schaafhausen Patentanwälte PartGmbB
(86) International application number: PCT/JP2024/025502
(87) International publication number: WO 2025/104972

(57) **Abstract**

Provided is a drive device (14) that drives an electric actuator (12) to which different unique identification information for each individual is allocated. The drive device comprises: an individual information storage unit (40) that stores, as first correspondence relationship information, the correspondence relationship between a port (22) of the drive device and the unique identification information of the electric actuator to be connected to the port; and an individual determination unit (34) that, when the electric actuator is connected to the port, determines whether a first correspondence relationship, which is the correspondence relationship between the port and the unique identification information of the electric actuator connected to the port, matches a correspondence relationship indicated by the first correspondence relationship information.

## Description

### TECHNICAL FIELD

The present invention relates to a drive device, a drive system, a determination method, a program, and a computer-readable non-transitory storage medium.

### BACKGROUND ART

In JP 2012-108608 A described below, a drive control device for an actuator is disclosed. The drive control device for the actuator controls driving of the actuator. The actuator is equipped with a displacement member and a drive unit. The drive unit, for example, is a linear motor, and serves to displace a displacement member.

### SUMMARY OF THE INVENTION

Recently, there has been a demand for a drive device, a drive system, a determination method, a program, and a computer-readable non-transitory storage medium with more favorable characteristics.

The present invention has the object of solving the aforementioned problem.

A first aspect of the present disclosure is characterized by a drive device that drives an electric actuator to which unique identification information different for each individual is assigned, the drive device including an individual information storage unit configured to store, as first correspondence relationship information, information indicating a correspondence relationship between a port of the drive device and the unique identification information of the electric actuator to be connected to the port, and an individual determination unit configured to, when the electric actuator is connected to the port, determine whether or not a first correspondence relationship, which is the correspondence relationship between the port and the unique identification information of the electric actuator that has been connected to the port, coincides with the correspondence relationship indicated by the first correspondence relationship information.

A second aspect of the present disclosure is characterized by a drive device that drives an electric actuator to which model identification information different for each model is assigned, the drive device including a model information storage unit configured to store, as second correspondence relationship information, information indicating a correspondence relationship between a port of the drive device and the model identification information of the electric actuator to be connected to the port, and a model determination unit configured to, when the electric actuator is connected to the port, determine whether or not a second correspondence relationship, which is the correspondence relationship between the port and the model identification information of the electric actuator that has been connected to the port, coincides with the correspondence relationship indicated by the second correspondence relationship information.

A third aspect of the present disclosure is characterized by a drive system equipped with the drive device according to the first aspect described above, the drive system including an acquisition unit configured to, in a case that the model determination unit has determined that the second correspondence relationship does not coincide with the correspondence relationship indicated by the second correspondence relationship information, acquire, from a specification information storage unit configured to store specification information that is information concerning a specification of the electric actuator, specification information corresponding to the electric actuator that has been connected to the drive device, and a setting unit configured to set, in the drive device, the specification information that has been acquired by the acquisition unit.

A fourth aspect of the present disclosure is characterized by a determination method of determining an electric actuator that has been connected to a drive device that drives an electric actuator to which unique identification information different for each individual is assigned, the determination method including an individual information storage step of causing an individual information storage unit to store, as first correspondence relationship information, information indicating a correspondence relationship between a port of the drive device and the unique identification information of the electric actuator to be connected to the port, and an individual determination step in which, when the electric actuator is connected to the port, an individual determination unit determines whether or not a first correspondence relationship, which is the correspondence relationship between the port and the unique identification information of the electric actuator that has been connected to the port, coincides with the correspondence relationship indicated by the first correspondence relationship information.

A fifth aspect of the present disclosure is characterized by a determination method of determining an electric actuator that has been connected to a drive device that drives an electric actuator to which model identification information different for each model is assigned, the determination method including a model information storage step of causing a model information storage unit to store, as second correspondence relationship information, information indicating a correspondence relationship between a port of the drive device and the model identification information of the electric actuator to be connected to the port, and a model determination step in which, when the electric actuator is connected to the port, a model determination unit determines whether or not a second correspondence relationship, which is the correspondence relationship between the port and the model identification information of the electric actuator that has been connected to the port, coincides with the correspondence relationship indicated by the second correspondence relationship information.

A sixth aspect of the present disclosure is characterized by a determination method of determining the electric actuator that has been connected to the drive device included in the drive system according to the third aspect described above, the determination method including an acquisition step in which, in the case that the model determination unit has determined that the second correspondence relationship does not coincide with the correspondence relationship indicated by the second correspondence relationship information, the acquisition unit acquires, from the specification information storage unit, the specification information corresponding to the electric actuator that has been connected to the drive device, and a setting step in which the setting unit sets, in the drive device, the specification information that has been acquired by the acquisition unit.

A seventh aspect of the present disclosure is characterized by a program for causing a computer to execute the determination method according to the fourth aspect described above.

An eighth aspect of the present disclosure is characterized by a computer-readable non-transitory storage medium in which the program according to the seventh aspect described above is stored.

According to the present invention, it is possible to provide a drive device, a drive system, a determination method, a program, and a computer-readable non-transitory storage medium with more favorable characteristics.

The above objects, features, and advantages will be easily understood from the following description of the embodiments, when taken in conjunction with the accompanying drawings.

### BRIEF DESCRIPTION OF DRAWINGS

[FIG. 1] FIG. 1 is a schematic diagram of a drive system according to a first embodiment;
[FIG. 2] FIG. 2 is a block diagram of an electric actuator according to the first embodiment;
[FIG. 3] FIG. 3 is a block diagram of a drive device according to the first embodiment;
[FIG. 4] FIG. 4 is a flowchart showing a correspondence relationship determination process carried out in the drive device according to the first embodiment;
[FIG. 5] FIG. 5 is a block diagram of an electric actuator according to a second embodiment;
[FIG. 6] FIG. 6 is a block diagram of a drive device according to the second embodiment;
[FIG. 7] FIG. 7 is a flowchart showing a correspondence relationship determination process carried out in the drive device according to the second embodiment;
[FIG. 8] FIG. 8 is a schematic diagram of a drive system according to a third embodiment;
[FIG. 9] FIG. 9 is a block diagram of an electric actuator according to the third embodiment;
[FIG. 10] FIG. 10 is a block diagram of a drive device according to the third embodiment;
[FIG. 11] FIG. 11 is a block diagram illustrating a configuration of a setting device according to the third embodiment;
[FIG. 12] FIG. 12 is a flowchart showing a correspondence relationship determination process carried out in the drive device according to the third embodiment;
[FIG. 13] FIG. 13 is a flowchart showing a specification information setting process carried out in the setting device according to the third embodiment;
[FIG. 14] FIG. 14 is a block diagram of a drive device according to a fourth embodiment;
[FIG. 15] FIG. 15 is a flowchart showing a specification information setting process carried out in the drive device according to the fourth embodiment;
[FIG. 16] FIG. 16 is a block diagram of an electric actuator according to a fifth embodiment;
[FIG. 17] FIG. 17 is a block diagram of a drive device according to the fifth embodiment; and
[FIG. 18] FIG. 18 is a flowchart showing a specification information setting process carried out in the drive device according to the fifth embodiment.

### DESCRIPTION OF THE INVENTION

Types of electric actuators include slider types, rod types, rotary tables, and the like. For example, in a slider type of electric actuator, the rotational motion of an electric motor is converted into linear motion by a linear motion mechanism, and the slide table is made to move along a linear guide.

Specifications for the electric actuator are determined for each model of the electric actuator. Information concerning the specifications for the electric actuator is information that is necessary for operating the electric actuator, and is managed as specification information. The specifications for the electric actuator, for example, are a minimum velocity and a maximum velocity or the like of the electric actuator. The specifications differ depending on the model of the electric actuator.

The electric actuator is connected to a drive device, and is driven based on a drive signal that is delivered from the drive device. The drive device includes a plurality of ports, to each of which one electric actuator can be connected. In the drive device, specification information of the electric actuator is set for each of the ports.

Normally, the types of the electric actuators to be connected to the drive device are determined in advance. Therefore, when the drive device is shipped from a manufacturer, the specification information of the electric actuators to be connected to the drive device is set in the drive device.

On the other hand, in order to increase the versatility of the drive device, there may be cases in which the manufacturer ships the drive device without setting the specification information in the drive device. Such a drive is referred to as a blank controller. When electric actuators are connected to a drive device that is a blank controller, it is necessary for the user to set, in the drive device, the specification information of the electric actuators to be connected to the drive device.

For each of the ports of the drive device, the specification information of the electric actuator to be connected to that port is set. However, in the case that an electric actuator that is not intended to be connected to the port is connected, there is a concern that a malfunction may occur in the drive device and the electric actuator.

According to the present disclosure, it is possible to determine that an electric actuator that is not intended to be connected to a port of a drive device has been connected to the port. In accordance with such a configuration, it is possible to suppress malfunctioning of the drive device and the electric actuator.

### [First Embodiment]

### [Configuration of Drive System]

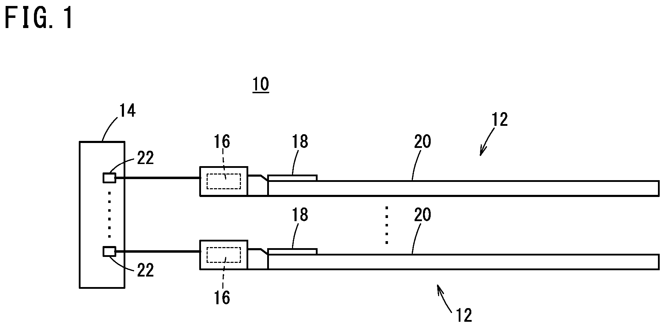

FIG. 1 is a schematic diagram of a drive system 10 according to a present embodiment. The drive system 10 is equipped with an electric actuator 12 and a drive device 14.

The electric actuator 12 of the present embodiment is a slider type of electric actuator. The electric actuator 12 includes an electric motor 16, a slide table 18, and a linear guide 20. In the electric actuator 12, the rotational motion of the electric motor 16 is converted into linear motion by a non-illustrated linear motion mechanism, and the slide table 18 is made to move along the linear guide 20. The type of the electric actuator 12 is not limited to being a slider type, and may be another type such as a rod type, a rotary table, or the like.

The drive device 14 includes a plurality of ports 22. One electric actuator 12 can be connected to each of the ports 22. The drive device 14, based on a ladder program or the like that is created by a user, drives the electric actuator 12 that is connected to each of the ports 22. The drive device 14 may be a device that has only one of the ports 22.

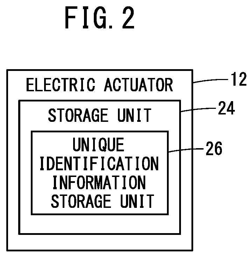

FIG. 2 is a block diagram of the electric actuator 12 according to the present embodiment. The electric actuator 12 includes a storage unit 24. The storage unit 24 is a computer-readable non-transitory storage medium. The storage unit 24, for example, is a non-volatile memory. As the non-volatile memory, for example, there may be cited a ROM (Read Only Memory), a flash memory, or the like.

The storage unit 24 includes a unique identification information storage unit 26. The unique identification information storage unit 26 stores unique identification information of the electric actuator 12. The unique identification information, for example, is a serial number (production number). A different number is assigned to each individual electric actuator 12 as unique identification information. The unique identification information, apart from numbers, may include letters, symbols, or the like.

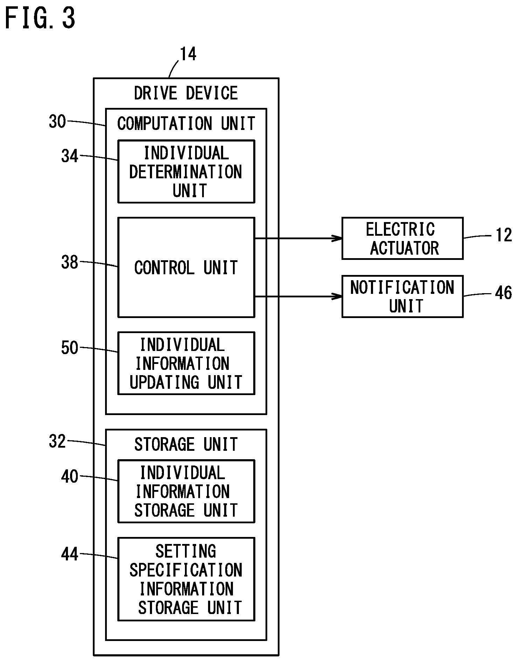

FIG. 3 is a block diagram of the drive device 14 according to the present embodiment. The drive device 14 includes a computation unit 30, and a storage unit 32.

The computation unit 30, for example, is a processor such as a CPU (Central Processing Unit) or a GPU (Graphics Processing Unit) or the like. The computation unit 30 comprises an individual determination unit 34, a control unit 38, and an individual information updating unit 50. The individual determination unit 34, the control unit 38, and the individual information updating unit 50 can be realized by a program that is stored in the storage unit 32 being executed in the computation unit 30. At least a portion of the individual determination unit 34, the control unit 38, and the individual information updating unit 50 may be realized by an integrated circuit such as an ASIC (Application Specific Integrated Circuit) or an FPGA (Field-Programmable Gate Array) or the like. At least a portion of the individual determination unit 34, the control unit 38, and the individual information updating unit 50 may be realized by an electronic circuit including a discrete device.

The storage unit 32 is a computer-readable non-transitory storage medium. The storage unit 32 is constituted by a non-illustrated volatile memory, and a non-illustrated non-volatile memory. As an example of the volatile memory, there may be cited a RAM (Random Access Memory) or the like. This volatile memory is used as a working memory of the processor, and temporarily stores data and the like that are required for processing or calculation. As an example of the non-volatile memory, there may be cited a ROM (Read Only Memory), a flash memory, or the like. This non-volatile memory is used as a storage memory, and stores a program, a table, a map, and the like. At least a portion of the storage unit 32 may be provided in the aforementioned processor, the integrated circuit, or the like. The storage unit 32 comprises an individual information storage unit 40 and a setting specification information storage unit 44.

First, a description will be given concerning the configuration of the storage unit 32. The individual information storage unit 40 stores as first correspondence relationship information the information indicating a correspondence relationship between the ports 22 of the drive device 14 and the unique identification information of the electric actuators 12 to be connected to the ports 22.

The setting specification information storage unit 44 stores the specification information of the electric actuator 12 to be connected to each of the ports 22 of the drive device 14. The specification information, as noted previously, is information concerning the specifications of the electric actuator 12. The specifications of the electric actuator 12, as noted previously, for example, are the minimum velocity and the maximum velocity or the like with respect to the electric actuator 12. As noted previously, the specifications of the electric actuator 12 differ depending on the model of the electric actuator 12.

Next, a description will be given concerning the configuration of the computation unit 30. When the electric actuator 12 is connected to any of the ports 22, the individual determination unit 34 determines whether or not a first correspondence relationship, which is a correspondence relationship between the port 22 and the unique identification information of the electric actuator 12 that has been connected to the port 22, coincides with the correspondence relationship indicated by the first correspondence relationship information that is stored in the individual information storage unit 40.

The control unit 38 controls a notification unit 46 and thereby issues a notification to the user. The notification unit 46 issues the notification to the user by flashing a light, emitting a sound, or the like. The notification unit 46 may carry out the notification to the user by another method.

For example, when the electric actuator 12 is connected to any of the ports 22, in the case that the first correspondence relationship, which is the correspondence relationship between the port 22 and the unique identification information of the electric actuator 12 that has been connected to the port 22, does not coincide with the correspondence relationship indicated by the first correspondence relationship information that is stored in the individual information storage unit 40, the control unit 38 controls the notification unit 46 and thereby carries out a notification to the user.

In accordance therewith, in the case that the electric actuator 12 that is not intended to be connected to the port 22 is connected to that port 22, the notification unit 46 will carry out a notification to the user, and therefore, the user can be made to recognize that a mistaken electric actuator 12 has been connected to that port 22.

Further, the control unit 38 controls the electric actuator 12. The control unit 38 generates a drive signal based on a ladder program or the like that is created by the user. The generated drive signal is output to the electric actuator 12 that has been connected to each of the ports 22.

The individual information updating unit 50 updates the first correspondence relationship information that is stored in the individual information storage unit 40.

### [Specifications of Electric Actuator]

An example of the specifications of the electric actuator 12 will be described below.

As examples of specifications relating to the characteristics of the electric actuator 12 there can be cited a "minimum velocity," a "maximum velocity," a "maximum acceleration," a "maximum movement position," a "maximum pushing torque," and a "gear ratio."

The "minimum velocity" is a minimum value that can be set as a velocity of the slide table 18 of the electric actuator 12. The "maximum velocity" is a maximum value that can be set as the velocity of the slide table 18. The "maximum acceleration" is a maximum value of the acceleration that can be set as a movement acceleration of the slide table 18. The "maximum movement position" is a maximum value that can be set as a movement position of the slide table 18. The "maximum pushing torque" is a maximum value of a pushing torque that can be set with respect to the electric actuator 12. The "gear ratio" is a gear ratio of the electric actuator 12.

As examples of specifications relating to alarm threshold values, there can be cited an "excessive velocity level" and an "electrical power source abnormality level."

The "excessive velocity level" is a threshold value in order to output an alarm in the case that the velocity of the slide table 18 has become excessive. In the case that the velocity of the slide table 18 has become greater than or equal to the velocity specified by the "excessive velocity level," the alarm is output. The "electrical power source abnormality level" is a threshold value in order to output an alarm in the case that the voltage of a non-illustrated electrical power source has become excessively large or excessively small. In the case that the voltage of the electrical power source has fallen outside of a voltage range defined by the "electrical power source abnormality level," the alarm is output.

As examples of specifications relating to the characteristics of the electric motor 16, there can be cited an "inertia," a "rated current," a "motor resistance," a "motor inductance," and a "motor current gain." As examples of specifications related to a control characteristic gain, there can be cited a "PID (Proportional-Integral-Differential) gain," a "weakening magnetic field," a "regeneration ratio," and a "lead angle command." These are items of information necessary for the drive device 14 to control the electric actuator 12.

### [Correspondence Relationship Determination Process]

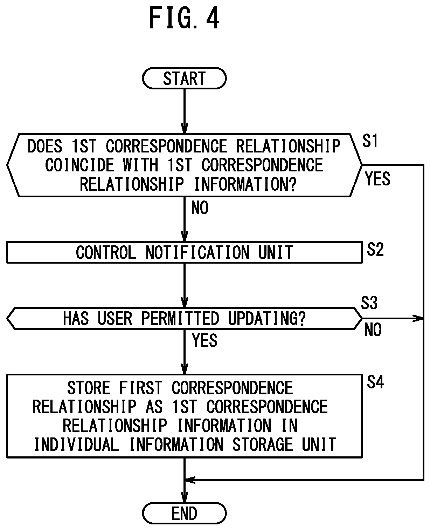

FIG. 4 is a flowchart showing a correspondence relationship determination process carried out in the drive device 14 according to the present embodiment. The correspondence relationship determination process is executed every time that the electric actuator 12 is connected to any of the ports 22.

In step S1, the individual determination unit 34 determines whether or not the first correspondence relationship, which is a correspondence relationship between the port 22 and the unique identification information of the electric actuator 12 that has been connected to the port 22, coincides with the correspondence relationship indicated by the first correspondence relationship information that is stored in the individual information storage unit 40. In the case it is determined that the first correspondence relationship coincides with the correspondence relationship indicated by the first correspondence relationship information (step S1: YES), the correspondence relationship determination process comes to an end. In the case it is determined that the first correspondence relationship does not coincide with the correspondence relationship indicated by the first correspondence relationship information (step S1: NO), the process transitions to step S2.

In step S2, the control unit 38 controls the notification unit 46 and thereby issues a notification to the user. Thereafter, the process transitions to step S3.

In step S3, the individual information updating unit 50 determines whether or not the user has permitted an update. In the case it is determined that the user has permitted the update (step S3: YES), the process proceeds to step S4. In the case it is determined that the user has not permitted the update (step S3: NO), the correspondence relationship determination process comes to an end.

For example, in the case that the notification unit 46 has issued a notification to the user, and the user has carried out an operation such as pressing a non-illustrated reset button or the like of the drive device 14, the individual information updating unit 50 determines that the user has permitted the update.

In step S4, the individual information updating unit 50 causes the individual information storage unit 40 to store, as first correspondence relationship information, information indicating the first correspondence relationship, which is a correspondence relationship between a current port 22 and the unique identification information of the electric actuator 12 that has been connected to that port 22. Thereafter, the correspondence relationship determination process comes to an end.

### [Second Embodiment]

### [Configuration of Drive System]

The drive system 10 of the present embodiment, similar to the drive system 10 of the first embodiment, is equipped with the electric actuator 12 and the drive device 14.

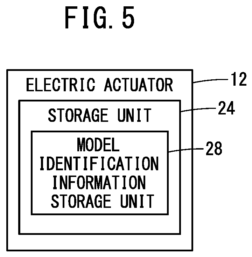

FIG. 5 is a block diagram of the electric actuator 12 according to the present embodiment. The electric actuator 12 includes the storage unit 24. In the same manner as the storage unit 24 of the first embodiment, the storage unit 24 of the present embodiment is a computer-readable non-transitory storage medium.

The storage unit 24 includes a model identification information storage unit 28. The model identification information storage unit 28 stores model identification information of the electric actuator 12. The model identification information, for example, is a model number (a model name, a product model number) of the electric actuator 12. A different number is assigned to each model of the electric actuator 12 as model identification information. The model identification information, apart from numbers, may include letters, symbols, or the like.

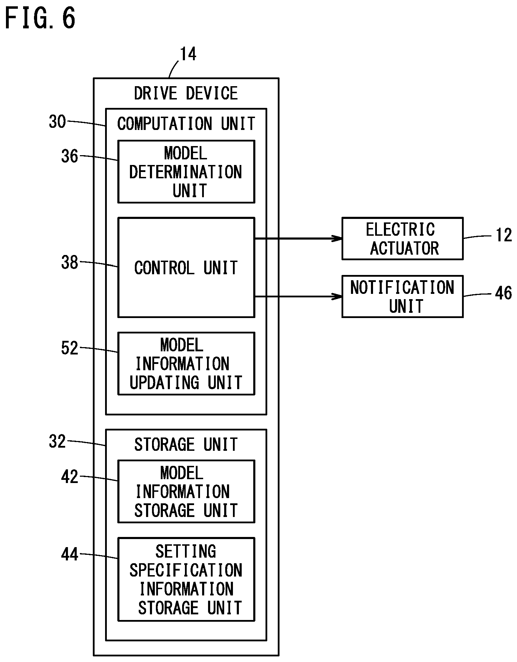

FIG. 6 is a block diagram of the drive device 14 according to the present embodiment. The drive device 14 includes the computation unit 30, and the storage unit 32.

In the same manner as the computation unit 30 (FIG. 3) of the drive device 14 of the first embodiment, the computation unit 30 of the present embodiment is a processor such as a CPU, a GPU, or the like. The computation unit 30 comprises a model determination unit 36, the control unit 38, and a model information updating unit 52. The model determination unit 36, the control unit 38, and the model information updating unit 52 can be realized by a program that is stored in the storage unit 32 being executed in the computation unit 30. At least a portion of the model determination unit 36, the control unit 38, and the model information updating unit 52 may be realized by an integrated circuit such as an ASIC, an FPGA, or the like. At least a portion of the model determination unit 36, the control unit 38, and the model information updating unit 52 may be realized by an electronic circuit including a discrete device.

In the same manner as the storage unit 32 (FIG. 3) of the drive device 14 of the first embodiment, the storage unit 32 of the present embodiment is a computer-readable non-transitory storage medium. The storage unit 32 comprises a model information storage unit 42 and the setting specification information storage unit 44.

First, a description will be given concerning the configuration of the storage unit 32. The model information storage unit 42 stores as second correspondence relationship information the information indicating the correspondence relationship between the ports 22 of the drive device 14, and the model identification information of the electric actuators 12 to be connected to the ports 22. The setting specification information storage unit 44 stores the specification information of the electric actuator 12 to be connected to each of the ports 22 of the drive device 14.

Next, a description will be given concerning the configuration of the computation unit 30. When the electric actuator 12 is connected to any of the ports 22, the model determination unit 36 determines whether or not a second correspondence relationship, which is a correspondence relationship between the port 22 and the model identification information of the electric actuator 12 that has been connected to the port 22, coincides with the correspondence relationship indicated by the second correspondence relationship information that is stored in the model information storage unit 42.

The control unit 38 controls the notification unit 46 and thereby issues a notification to the user. The notification unit 46 issues the notification to the user by flashing a light, emitting a sound, or the like. The notification unit 46 may carry out the notification to the user by another method.

For example, when the electric actuator 12 is connected to any of the ports 22, in the case that the second correspondence relationship, which is the correspondence relationship between the port 22 and the model identification information of the electric actuator 12 that has been connected to the port 22, does not coincide with the correspondence relationship indicated by the second correspondence relationship information that is stored in the model information storage unit 42, the control unit 38 controls the notification unit 46 and thereby carries out a notification to the user.

As a result, in the case that the electric actuator 12 that is not intended to be connected to the port 22 is connected to that port 22, the notification unit 46 will carry out a notification to the user, and therefore, the user can be made to recognize that a mistaken electric actuator 12 has been connected to that port 22.

Further, the control unit 38 controls the electric actuator 12. The control unit 38 generates a drive signal based on a ladder program or the like that is created by the user. The generated drive signal is output to the electric actuator 12 that has been connected to each of the ports 22.

### [Correspondence Relationship Determination Process]

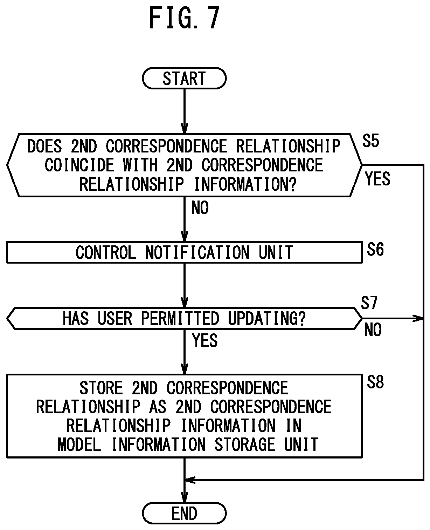

FIG. 7 is a flowchart showing a correspondence relationship determination process carried out in the drive device 14 according to the present embodiment. The correspondence relationship determination process is executed every time that the electric actuator 12 is connected to any of the ports 22.

In step S5, the model determination unit 36 determines whether or not the second correspondence relationship, which is the correspondence relationship between the port 22 and the model identification information of the electric actuator 12 that has been connected to the port 22, coincides with the correspondence relationship indicated by the second correspondence relationship information that is stored in the model information storage unit 42. In the case it is determined that the second correspondence relationship coincides with the correspondence relationship indicated by the second correspondence relationship information (step S5: YES), the correspondence relationship determination process comes to an end. In the case it is determined that the second correspondence relationship does not coincide with the correspondence relationship indicated by the second correspondence relationship information (step S5: NO), the process transitions to step S6.

In step S6, the control unit 38 controls the notification unit 46 and thereby issues a notification to the user. Thereafter, the process transitions to step S7.

In step S7, the model information updating unit 52 determines whether or not the user has permitted an update. In the case it is determined that the user has permitted the update (step S7: YES), the process proceeds to step S8. In the case it is determined that the user has not permitted the update (step S7: NO), the correspondence relationship determination process comes to an end.

In step S8, the model information updating unit 52 causes the model information storage unit 42 to store, as second correspondence relationship information, information indicating the second correspondence relationship, which is the correspondence relationship between a current port 22 and the model identification information of the electric actuator 12 that has been connected to that port 22. Thereafter, the correspondence relationship determination process comes to an end.

### (Third Embodiment)

In the present embodiment, the first correspondence relationship information that is stored in the individual information storage unit 40, the second correspondence relationship information that is stored in the model information storage unit 42, and the specification information that is stored in the setting specification information storage unit 44 are updated, depending on the electric actuator 12 that has been connected to the port 22 of the drive device 14.

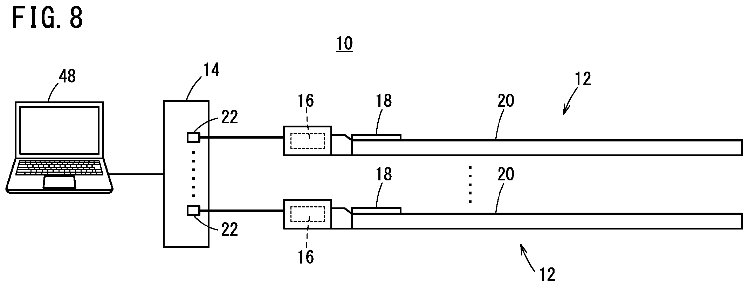

FIG. 8 is a schematic diagram of the drive system 10 according to the present embodiment. The drive system 10 of the present embodiment, in addition to the electric actuator 12 and the drive device 14, is equipped with a setting device 48.

The setting device 48, for example, is a personal computer. Setting software is installed in the setting device 48. Due to the setting software, the specification information of the electric actuators 12 is set in the drive device 14. When the specification information of the electric actuators 12 is set in the drive device 14, the setting device 48 is connected to the drive device 14. When the drive device 14 drives the electric actuators 12, the setting device 48 need not necessarily be connected to the drive device 14.

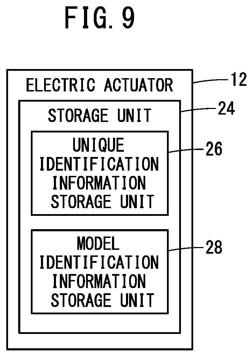

FIG. 9 is a block diagram of the electric actuator 12 according to the present embodiment. The electric actuator 12 includes the storage unit 24. In the same manner as the storage unit 24 of the first embodiment, the storage unit 24 of the present embodiment is a computer-readable non-transitory storage medium.

The storage unit 24 comprises the unique identification information storage unit 26 and the model identification information storage unit 28. The unique identification information storage unit 26 stores unique identification information of the electric actuator 12. The model identification information storage unit 28 stores model identification information of the electric actuator 12.

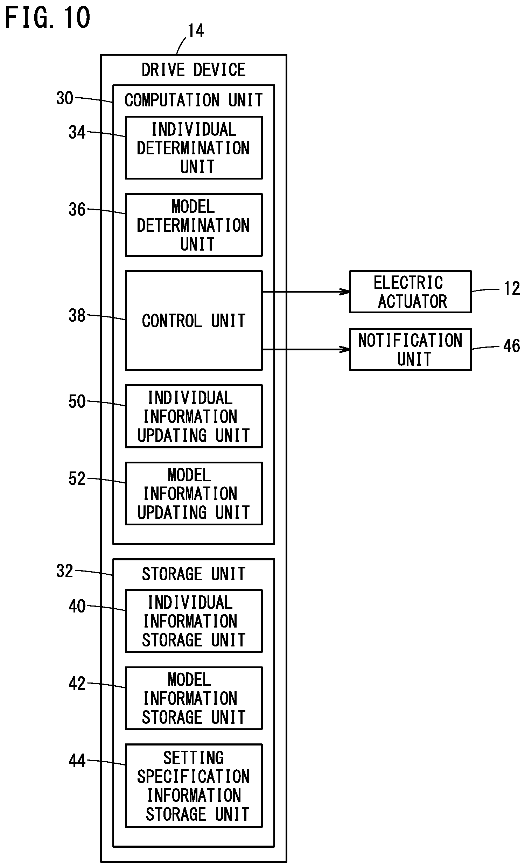

FIG. 10 is a block diagram of the drive device 14 according to the present embodiment. The drive device 14 includes the computation unit 30, and the storage unit 32.

In the same manner as the computation unit 30 (FIG. 3) of the drive device 14 of the first embodiment, the computation unit 30 of the drive device 14 of the present embodiment is a processor such as a CPU, a GPU, or the like. The computation unit 30 comprises the individual determination unit 34, the model determination unit 36, the control unit 38, the individual information updating unit 50, and the model information updating unit 52. The individual determination unit 34, the model determination unit 36, the control unit 38, the individual information updating unit 50, and the model information updating unit 52 can be realized by a program that is stored in the storage unit 32 being executed in the computation unit 30. At least a portion of the individual determination unit 34, the model determination unit 36, the control unit 38, the individual information updating unit 50, and the model information updating unit 52 may be realized by an integrated circuit such as an ASIC, an FPGA, or the like. At least a portion of the individual determination unit 34, the model determination unit 36, the control unit 38, the individual information updating unit 50, and the model information updating unit 52 may be realized by an electronic circuit including a discrete device.

In the same manner as the storage unit 32 (FIG. 3) of the drive device 14 of the first embodiment, the storage unit 32 of the drive device 14 of the present embodiment is a computer-readable non-transitory storage medium. The storage unit 32 of the drive device 14 of the present embodiment comprises the individual information storage unit 40, the model information storage unit 42, and the setting specification information storage unit 44.

First, a description will be given concerning the configuration of the storage unit 32. The individual information storage unit 40 stores the aforementioned first correspondence relationship information. The model information storage unit 42 stores the aforementioned second correspondence relationship information. The setting specification information storage unit 44 stores the specification information of the electric actuator 12 to be connected to each of the ports 22 of the drive device 14.

Next, a description will be given concerning the configuration of the computation unit 30. When the electric actuator 12 is connected to any of the ports 22, the individual determination unit 34 determines whether or not a first correspondence relationship, which is a correspondence relationship between the ports 22 and the unique identification information of the electric actuator 12 that has been connected to the port 22, coincides with the correspondence relationship indicated by the first correspondence relationship information that is stored in the individual information storage unit 40. When the electric actuator 12 is connected to any of the ports 22, the model determination unit 36 determines whether or not a second correspondence relationship, which is a correspondence relationship between the ports 22 and the model identification information of the electric actuator 12 that has been connected to the port 22, coincides with the correspondence relationship indicated by the second correspondence relationship information that is stored in the model information storage unit 42.

The control unit 38 controls the notification unit 46 and thereby issues a notification to the user. The notification unit 46 issues the notification to the user by flashing a light, emitting a sound, or the like. The notification unit 46 may carry out the notification to the user by another method. Further, the control unit 38 controls the electric actuator 12.

The individual information updating unit 50 updates the first correspondence relationship information that is stored in the individual information storage unit 40. The model information updating unit 52 updates the second correspondence relationship information that is stored in the model information storage unit 42.

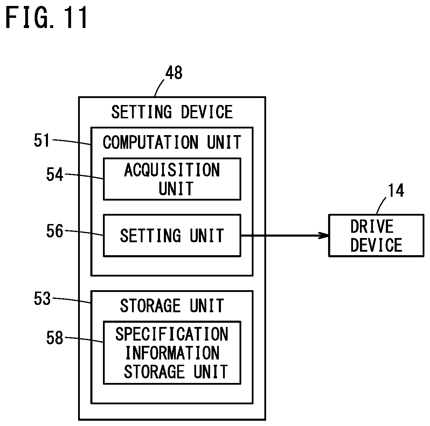

FIG. 11 is a block diagram illustrating a configuration of the setting device 48 according to the present embodiment. The setting device 48 includes a computation unit 51, and a storage unit 53.

The computation unit 51 is constituted by a processor such as a CPU, a GPU, or the like. The computation unit 51 comprises an acquisition unit 54 and a setting unit 56. The acquisition unit 54 and the setting unit 56 are realized by the computation unit 51 executing a program that is stored in the storage unit 53. At least a portion of the acquisition unit 54 and the setting unit 56 may be realized by an integrated circuit such as an ASIC, an FPGA, or the like. At least a portion of the acquisition unit 54 and the setting unit 56 may be realized by an electronic circuit including a discrete device.

The storage unit 53 is a computer-readable non-transitory storage medium. The storage unit 53 is constituted by a non-illustrated volatile memory, and a non-illustrated non-volatile memory. The volatile memory, for example, is a RAM or the like. The non-volatile memory, for example, is a ROM, a flash memory, or the like. Data and the like are stored, for example, in the volatile memory. A program, a table, a map and the like are stored, for example, in the non-volatile memory. At least a portion of the storage unit 53 may be provided in the aforementioned processor, the integrated circuit, or the like. At least a portion of the storage unit 53 may be installed in a device that has been connected by a network to the setting device 48.

The storage unit 53 includes a specification information storage unit 58. The specification information storage unit 58 stores the specification information for each model of the electric actuator 12.

The acquisition unit 54 acquires, from the electric actuator 12 that has been connected to each of the ports 22 of the drive device 14, the model identification information of the electric actuator 12. As noted previously, the model identification information, for example, is a model number (a model name, a product model number) of the electric actuator 12. The acquisition unit 54 acquires, from the specification information storage unit 58, the specification information of the electric actuator 12 corresponding to the model identification information that has been acquired. The specification information, as noted previously, is information concerning the specifications of the electric actuator 12. The specifications of the electric actuator 12, as noted previously, for example, are the minimum velocity and the maximum velocity or the like that can be set with respect to the electric actuator 12.

The setting unit 56 sets in the drive device 14 the specification information that has been acquired by the acquisition unit 54. More specifically, the setting unit 56 causes the setting specification information storage unit 44 that is provided in the drive device 14 to store the specification information that has been acquired by the acquisition unit 54. In accordance therewith, the specification information of the electric actuator 12 that has been connected to each of the ports 22 is stored in the setting specification information storage unit 44.

According to the present embodiment, the setting device 48 sets in the drive device 14 the specification information of the electric actuator 12 that has been connected to each of the ports 22 of the drive device 14. In accordance therewith, it is possible to suppress the mistaken setting of specification information in the drive device 14, and it is possible to suppress malfunctioning of the drive device 14 and the electric actuator 12.

### [Correspondence Relationship Determination Process]

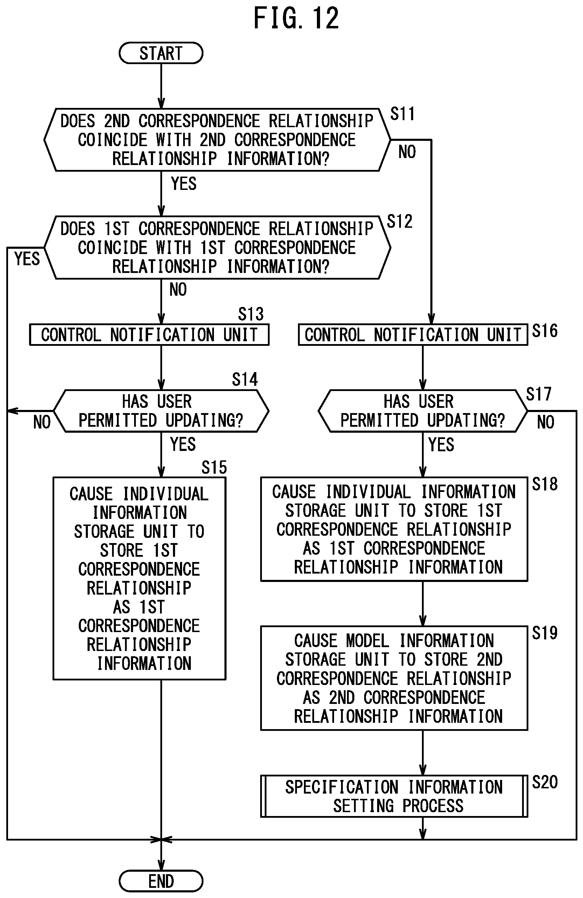

FIG. 12 is a flowchart showing a correspondence relationship determination process carried out in the drive device 14 according to the present embodiment. Each time that the electric actuator 12 is connected to any of the ports 22, the correspondence relationship determination process is executed.

In step S11, the model determination unit 36 determines whether or not the second correspondence relationship, which is the correspondence relationship between the port 22 and the model identification information of the electric actuator 12 that has been connected to the port 22, coincides with the correspondence relationship indicated by the second correspondence relationship information that is stored in the model information storage unit 42. In the case it is determined that the second correspondence relationship coincides with the correspondence relationship indicated by the second correspondence relationship information (step S11: YES), the process transitions to step S12. In the case it is determined that the second correspondence relationship does not coincide with the correspondence relationship indicated by the second correspondence relationship information (step S11: NO), the process transitions to step S16.

Moreover, in a state in which the electric actuator 12 has never been connected to the drive device 14, the second correspondence relationship information is not stored in the model information storage unit 42. In this case, in step S11, it is determined that the second correspondence relationship does not coincide with the correspondence relationship indicated by the second correspondence relationship information.

In step S12, the individual determination unit 34 determines whether or not the first correspondence relationship, which is the correspondence relationship between the port 22 and the unique identification information of the electric actuator 12 that has been connected to the port 22, coincides with the correspondence relationship indicated by the first correspondence relationship information that is stored in the individual information storage unit 40. In the case it is determined that the first correspondence relationship coincides with the correspondence relationship indicated by the first correspondence relationship information (step S12: YES), the correspondence relationship determination process comes to an end. In the case it is determined that the first correspondence relationship does not coincide with the correspondence relationship indicated by the first correspondence relationship information (step S12: NO), the process transitions to step S13.

Moreover, in a state in which the electric actuator 12 has never been connected to the drive device 14, the first correspondence relationship information is not stored in the individual information storage unit 40. In this case, in step S12, it is determined that the first correspondence relationship does not coincide with the correspondence relationship indicated by the first correspondence relationship information.

In step S13, the control unit 38 controls the notification unit 46 and thereby issues a notification to the user. Thereafter, the process transitions to step S14.

In step S14, the individual information updating unit 50 determines whether or not the user has permitted an update. In the case it is determined that the user has permitted the update (step S14: YES), the process proceeds to step S15. In the case it is determined that the user has not permitted the update (step S14: NO), the correspondence relationship determination process comes to an end.

In step S15, the individual information updating unit 50 causes the individual information storage unit 40 to store, as first correspondence relationship information, information indicating the first correspondence relationship, which is the correspondence relationship between a current port 22 and the unique identification information of the electric actuator 12 that has been connected to that port 22. Thereafter, the correspondence relationship determination process comes to an end.

In step S16, the control unit 38 controls the notification unit 46 and thereby issues a notification to the user. Thereafter, the process transitions to step S17.

In step S17, the individual information updating unit 50 and the model information updating unit 52 determine whether or not the user has permitted an update. In the case it is determined that the user has permitted the update (step S17: YES), the process proceeds to step S18. In the case it is determined that the user has not permitted the update (step S17: NO), the correspondence relationship determination process comes to an end.

In step S18, the individual information updating unit 50 causes the individual information storage unit 40 to store, as first correspondence relationship information, information indicating the first correspondence relationship, which is the correspondence relationship between the current port 22 and the unique identification information of the electric actuator 12 that has been connected to that port 22. Thereafter, the process transitions to step S19.

In step S19, the model information updating unit 52 causes the model information storage unit 42 to store, as second correspondence relationship information, information indicating the second correspondence relationship, which is the correspondence relationship between the current port 22 and the model identification information of the electric actuator 12 that has been connected to that port 22. Thereafter, the process transitions to step S20.

In step S20, the drive device 14 calls the specification information setting process. Thereafter, the correspondence relationship determination process comes to an end.

### [Specification Information Setting Process]

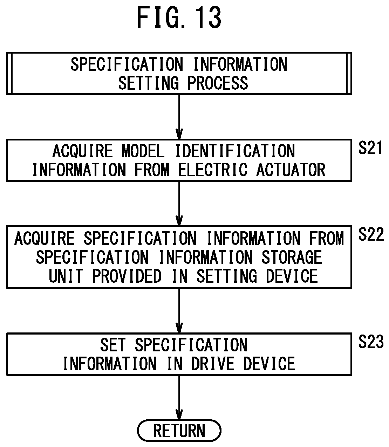

FIG. 13 is a flowchart showing a specification information setting process carried out in the setting device 48 according to the present embodiment. The specification information setting process is executed every time that the specification information setting process is called in step S20 of the correspondence relationship determination process (FIG. 12).

In step S21, the acquisition unit 54 acquires the model identification information of the electric actuator 12, from the electric actuator 12 that has been connected to each of the ports 22 of the drive device 14. Thereafter, the process transitions to step S22. The model identification information, as noted previously, for example, is a model number (a model name, a product model number) of the electric actuator 12.

In step S22, the acquisition unit 54 acquires, from the specification information storage unit 58 that is provided in the setting device 48, the specification information of the electric actuator 12 corresponding to the model identification information that has been acquired. Thereafter, the process transitions to step S23. The specification information, as noted previously, is information concerning the specifications of the electric actuator 12. The specifications of the electric actuator 12, as noted previously, for example, are the minimum velocity and the maximum velocity or the like that can be set with respect to the electric actuator 12.

In step S23, the setting unit 56 sets in the drive device 14 the specification information that has been acquired by the acquisition unit 54. Thereafter, the specification information setting process comes to an end. More specifically, the setting unit 56 causes the setting specification information storage unit 44 that is provided in the drive device 14 to store the specification information that has been acquired by the acquisition unit 54. In accordance therewith, the specification information of the electric actuator 12 that has been connected to each of the ports 22 is stored in the setting specification information storage unit 44.

### [Fourth Embodiment]

In the third embodiment, the specification information storage unit 58 is disposed in the storage unit 53 of the setting device 48. Furthermore, in the third embodiment, the specification information of the electric actuator 12 is set in the drive device 14 by the setting device 48.

In contrast thereto, according to the present embodiment, a specification information storage unit 64 is provided in the storage unit 32 of the drive device 14. Furthermore, in the present embodiment, the specification information of the electric actuator 12 is set in the drive device 14 by the drive device 14. According to the present embodiment, the setting device 48 need not necessarily be connected to the drive device 14.

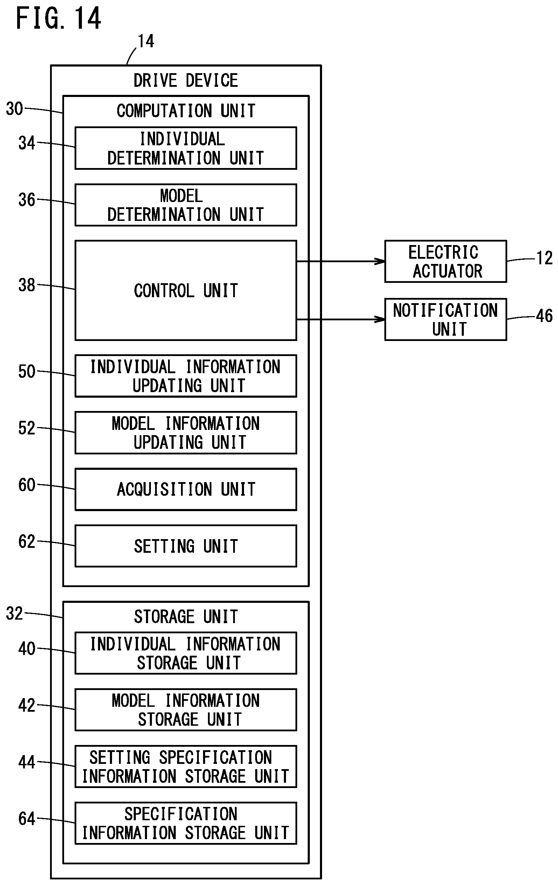

FIG. 14 is a block diagram of the drive device 14 according to the present embodiment. The drive device 14 includes the computation unit 30, and the storage unit 32.

In the same manner as the computation unit 30 (FIG. 3) of the drive device 14 of the first embodiment, the computation unit 30 of the drive device 14 of the present embodiment is a processor such as a CPU, a GPU, or the like. The computation unit 30 comprises the individual determination unit 34, the model determination unit 36, the control unit 38, the individual information updating unit 50, the model information updating unit 52, an acquisition unit 60, and a setting unit 62. The individual determination unit 34, the model determination unit 36, the control unit 38, the individual information updating unit 50, the model information updating unit 52, the acquisition unit 60, and the setting unit 62 can be realized by a program that is stored in the storage unit 32 being executed in the computation unit 30. At least a portion of the individual determination unit 34, the model determination unit 36, the control unit 38, the individual information updating unit 50, the model information updating unit 52, the acquisition unit 60, and the setting unit 62 may be realized by an integrated circuit such as an ASIC, an FPGA, or the like. At least a portion of the individual determination unit 34, the model determination unit 36, the control unit 38, the individual information updating unit 50, the model information updating unit 52, the acquisition unit 60, and the setting unit 62 may be realized by an electronic circuit including a discrete device.

In the same manner as the storage unit 32 (FIG. 3) of the drive device 14 of the first embodiment, the storage unit 32 of the drive device 14 of the present embodiment is a computer-readable non-transitory storage medium. The storage unit 32 of the present embodiment comprises the individual information storage unit 40, the model information storage unit 42, the setting specification information storage unit 44, and the specification information storage unit 64.

First, a description will be given concerning the configuration of the storage unit 32. The individual information storage unit 40 stores the aforementioned first correspondence relationship information. The model information storage unit 42 stores the aforementioned second correspondence relationship information. The setting specification information storage unit 44 stores the specification information of the electric actuator 12 to be connected to each of the ports 22 of the drive device 14. The specification information storage unit 64 stores the specification information for each model of the electric actuator 12.

Next, a description will be given concerning the configuration of the computation unit 30. When the electric actuator 12 is connected to any of the ports 22, the individual determination unit 34 determines whether or not a first correspondence relationship, which is a correspondence relationship between the port 22 and the unique identification information of the electric actuator 12 that has been connected to the port 22, coincides with the correspondence relationship indicated by the first correspondence relationship information that is stored in the individual information storage unit 40. When the electric actuator 12 is connected to the port 22, the model determination unit 36 determines whether or not a second correspondence relationship, which is a correspondence relationship between the port 22 and the model identification information of the electric actuator 12 that has been connected to the port 22, coincides with the correspondence relationship indicated by the second correspondence relationship information that is stored in the model information storage unit 42.

The control unit 38 controls the notification unit 46 and thereby issues a notification to the user. The notification unit 46 issues the notification to the user by flashing a light, emitting a sound, or the like. The notification unit 46 may carry out the notification to the user by another method. Further, the control unit 38 controls the electric actuator 12.

The individual information updating unit 50 updates the first correspondence relationship information that is stored in the individual information storage unit 40. The model information updating unit 52 updates the second correspondence relationship information that is stored in the model information storage unit 42.

The acquisition unit 60 acquires, from the electric actuator 12 that has been connected to each of the ports 22 of the drive device 14, the model identification information of the electric actuator 12. The acquisition unit 60 acquires, from the specification information storage unit 64, the specification information of the electric actuator 12 corresponding to the model identification information that has been acquired.

The setting unit 62 sets in the drive device 14 the specification information that has been acquired by the acquisition unit 60. More specifically, the setting unit 62 causes the setting specification information storage unit 44 to store the specification information that has been acquired by the acquisition unit 60. In accordance therewith, the specification information of the electric actuator 12 that has been connected to each of the ports 22 is stored in the setting specification information storage unit 44.

According to the present embodiment, the drive device 14 sets in the drive device 14 the specification information of the electric actuator 12 that has been connected to each of the ports 22 of the drive device 14. In accordance therewith, it is possible to suppress the mistaken setting of specification information in the drive device 14, and it is possible to suppress malfunctioning of the drive device 14 and the electric actuator 12.

### [Specification Information Setting Process]

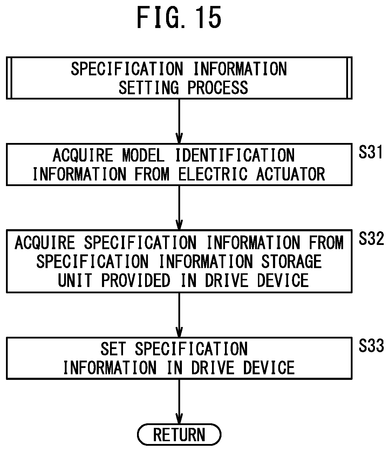

FIG. 15 is a flowchart showing a specification information setting process carried out in the drive device 14 according to the present embodiment.

Similar to the drive device 14 according to the third embodiment, the correspondence relationship determination process is executed in the drive device 14 of the present embodiment. The specification information setting process is executed every time that the specification information setting process is called in step S20 of the correspondence relationship determination process (FIG. 12).

In step S31, the acquisition unit 60 acquires the model identification information of the electric actuator 12, from the electric actuator 12 that has been connected to each of the ports 22. Thereafter, the process transitions to step S32. The model identification information, as noted previously, for example, is a model number (a model name, a product model number) of the electric actuator 12.

In step S32, the acquisition unit 60 acquires, from the specification information storage unit 64 that is provided in the drive device 14, the specification information of the electric actuator 12 corresponding to the model identification information that has been acquired. Thereafter, the process transitions to step S33. The specification information, as noted previously, is information concerning the specifications of the electric actuator 12. The specifications of the electric actuator 12, as noted previously, for example, are the minimum velocity and the maximum velocity or the like that can be set with respect to the electric actuator 12.

In step S33, the setting unit 62 sets in the drive device 14 the specification information that has been acquired by the acquisition unit 60. Thereafter, the specification information setting process comes to an end. More specifically, the setting unit 62 causes the setting specification information storage unit 44 that is provided in the drive device 14 to store the specification information that has been acquired by the acquisition unit 60. In accordance therewith, the specification information of the electric actuator 12 that has been connected to each of the ports 22 is stored in the setting specification information storage unit 44.

### [Fifth Embodiment]

In the third embodiment, the specification information storage unit 58 is disposed in the storage unit 53 of the setting device 48. Furthermore, in the third embodiment, the specification information of the electric actuator 12 is set in the drive device 14 by the setting device 48.

In contrast thereto, according to the present embodiment, a specification information storage unit 66 is provided in the storage unit 24 of the electric actuator 12. Furthermore, in the present embodiment, the specification information of the electric actuator 12 is set in the drive device 14 by the drive device 14. According to the present embodiment, the setting device 48 need not necessarily be connected to the drive device 14.

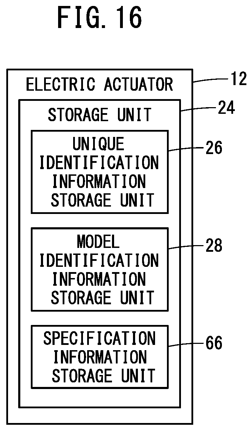

FIG. 16 is a block diagram of the electric actuator 12 according to the present embodiment. The electric actuator 12 includes the storage unit 24. In the same manner as the storage unit 24 of the electric actuator 12 of the first embodiment, the storage unit 24 of the electric actuator 12 of the present embodiment is a computer-readable non-transitory storage medium.

The storage unit 24 of the present embodiment comprises the unique identification information storage unit 26, the model identification information storage unit 28, and the specification information storage unit 66. The unique identification information storage unit 26 stores unique identification information of the electric actuator 12. The model identification information storage unit 28 stores model identification information of the electric actuator 12.

The specification information storage unit 66 stores the specification information of the electric actuator 12 in which the specification information storage unit 66 is provided. In the specification information storage unit 58 of the setting device 48 of the third embodiment, and further, in the specification information storage unit 64 of the drive device 14 of the fourth embodiment, there is stored the specification information for a plurality of models of the electric actuators 12 that are capable of being connected to the drive device 14. On the other hand, in the specification information storage unit 66 of the electric actuator 12 of the present embodiment, there is stored only the specification information of the electric actuator 12 in which the specification information storage unit 66 is provided.

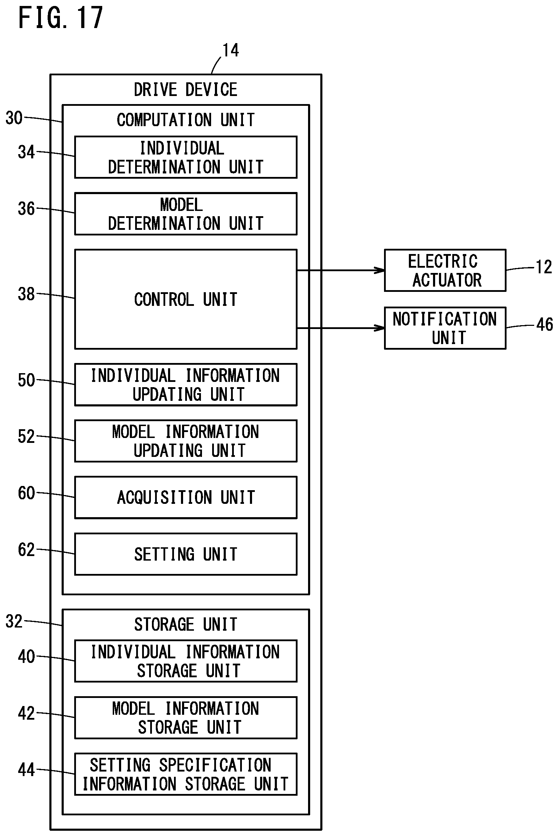

FIG. 17 is a block diagram of the drive device 14 according to the present embodiment. The drive device 14 includes the computation unit 30, and the storage unit 32.

In the same manner as the computation unit 30 (FIG. 3) of the drive device 14 of the first embodiment, the computation unit 30 of the drive device 14 of the present embodiment is a processor such as a CPU, a GPU, or the like. The configuration of the computation unit 30 of the present embodiment is the same as the configuration of the computation unit 30 of the fourth embodiment.

In the same manner as the storage unit 32 (FIG. 3) of the drive device 14 of the first embodiment, the storage unit 32 of the drive device 14 of the present embodiment is a computer-readable non-transitory storage medium. The storage unit 32 of the present embodiment comprises the individual information storage unit 40, the model information storage unit 42, and the setting specification information storage unit 44. More specifically, the storage unit 32 of this embodiment, unlike the storage unit 32 of the fourth embodiment (FIG. 14), does not include the specification information storage unit 64.

According to the present embodiment, the drive device 14 sets in the drive device 14 the specification information of the electric actuator 12 that has been connected to each of the ports 22 of the drive device 14. In accordance therewith, it is possible to suppress the mistaken setting of specification information in the drive device 14, and it is possible to suppress malfunctioning of the drive device 14 and the electric actuator 12.

### [Specification Information Setting Process]

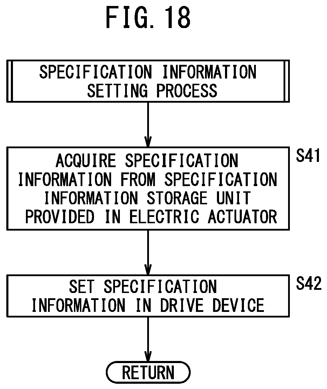

FIG. 18 is a flowchart showing a specification information setting process carried out in the drive device 14 according to the present embodiment. Similar to the drive device 14 according to the third embodiment, the correspondence relationship determination process is executed in the drive device 14 of the present embodiment. The specification information setting process is executed every time that the specification information setting process is called in step S20 of the correspondence relationship determination process (FIG. 12).

In step S41, the acquisition unit 60 acquires the specification information of the electric actuator 12, from the specification information storage unit 66 that is provided in the electric actuator 12 that has been connected to each of the ports 22. The specification information, as noted previously, is information concerning the specifications of the electric actuator 12. The specifications of the electric actuator 12, as noted previously, for example, are the minimum velocity and the maximum velocity or the like of the electric actuator 12. Thereafter, the process transitions to step S42.

In step S42, the setting unit 62 sets in the drive device 14 the specification information that has been acquired by the acquisition unit 60. More specifically, the setting unit 62 causes the setting specification information storage unit 44 provided in the drive device 14 to store the specification information acquired by the acquisition unit 60. Thereafter, the specification information setting process comes to an end.

### [Other Embodiments]

In the third embodiment, the setting device 48 acquires the specification information of the electric actuator 12 from the specification information storage unit 58 of the setting device 48, and sets the specification information of the electric actuator 12 in the drive device 14. In contrast thereto, the drive device 14 may acquire the specification information of the electric actuator 12 from the specification information storage unit 58 of the setting device 48, and may set the specification information of the electric actuator 12 in the drive device 14.

In the fourth embodiment, the drive device 14 acquires the specification information of the drive device 14 from the specification information storage unit 64 of the drive device 14, and sets the specification information of the electric actuator 12 in the drive device 14. In contrast thereto, the setting device 48 may acquire the specification information of the drive device 14 from the specification information storage unit 64 of the drive device 14, and may set the specification information of the electric actuator 12 in the drive device 14.

In the fifth embodiment, the drive device 14 acquires the specification information of the electric actuator 12 from the specification information storage unit 66 of the electric actuator 12, and sets the specification information of the electric actuator 12 in the drive device 14. In contrast thereto, the setting device 48 may acquire the specification information of the electric actuator 12 from the specification information storage unit 66 that is provided in the electric actuator 12, and may set the specification information of the electric actuator 12 in the drive device 14.

Although concerning the present disclosure, a detailed description thereof has been presented above, the present disclosure is not necessarily limited to the individual embodiments described above. These embodiments may be subjected to various additions, substitutions, modifications, partial deletions and the like, within a range that does not deviate from the essence and gist of the present disclosure, or the spirit of the present disclosure as derived from the contents described in the claims and equivalents thereof. Further, the embodiments can also be implemented together in combination. For example, in the above-described embodiments, the order of the operations and the order of the processes are illustrated as examples, and the present invention is not necessarily limited to these features. The same also applies to cases in which numerical values or mathematical expressions are used in the description of the aforementioned embodiments.

Concerning the above-described disclosure, the following supplementary notes are further disclosed.

### (Supplementary Note 1)

The drive device (14) that drives the electric actuator (12) to which unique identification information different for each individual is assigned, the drive device including the individual information storage unit (40) configured to store, as the first correspondence relationship information, the information indicating the correspondence relationship between the port (22) of the drive device and the unique identification information of the electric actuator to be connected to the port, and the individual determination unit (34) configured to, when the electric actuator is connected to the port, determine whether or not the first correspondence relationship, which is the correspondence relationship between the port and the unique identification information of the electric actuator that has been connected to the port, coincides with the correspondence relationship indicated by the first correspondence relationship information. In accordance with such a configuration, it is possible to determine that an electric actuator that is not intended to be connected to a port of the drive device has been connected to the port.

### (Supplementary Note 2)

In the drive device according to Supplementary Note 1, there may further be provided the control unit (38) configured to, in the case that the individual determination unit has determined that the first correspondence relationship does not coincide with the correspondence relationship indicated by the first correspondence relationship information, carry out the control to issue the notification to the user. In accordance with such a configuration, in the case that the electric actuator that is not intended to be connected to the port is connected to that port, the notification will be issued to the user, and therefore, the user can be made to recognize that a mistaken electric actuator has been connected to that port.

### (Supplementary Note 3)

In the drive device according to Supplementary Note 1, there may further be provided the individual information updating unit (50) configured to, in the case that the individual determination unit has determined that the first correspondence relationship does not coincide with the correspondence relationship indicated by the first correspondence relationship information, cause the individual information storage unit to store, as the first correspondence relationship information, the information indicating the first correspondence relationship. In accordance with such a configuration, it is possible for the first correspondence relationship information of the individual information storage unit to be updated in accordance with the electric actuator that has been connected to the port of the drive device.

### (Supplementary Note 4)

In the drive device according to Supplementary Note 3, the electric actuator may be assigned model identification information different for each model, and there may further be provided the model information storage unit (42) configured to store, as the second correspondence relationship information, the information indicating the correspondence relationship between the port and the model identification information of the electric actuator to be connected to the port, the model determination unit (36) configured to, when the electric actuator is connected to the port, determine whether or not the second correspondence relationship, which is the correspondence relationship between the port and the model identification information of the electric actuator that has been connected to the port, coincides with the correspondence relationship indicated by the second correspondence relationship information, and the model information updating unit (52) configured to, in the case that the model determination unit has determined that the second correspondence relationship does not coincide with the correspondence relationship indicated by the second correspondence relationship information, cause the model information storage unit to store, as the second correspondence relationship information, the information indicating the second correspondence relationship. In accordance with such a configuration, it is possible for the second correspondence relationship information of the model information storage unit to be updated in accordance with the electric actuator that has been connected to the port of the drive device.

### (Supplementary Note 5)

The drive device that drives the electric actuator to which model identification information different for each model is assigned, the drive device including the model information storage unit configured to store, as the second correspondence relationship information, the information indicating the correspondence relationship between the port of the drive device and the model identification information of the electric actuator to be connected to the port, and the model determination unit configured to, when the electric actuator is connected to the port, determine whether or not the second correspondence relationship, which is the correspondence relationship between the port and the model identification information of the electric actuator that has been connected to the port, coincides with the correspondence relationship indicated by the second correspondence relationship information. In accordance with such a configuration, it is possible to determine that an electric actuator that is not intended to be connected to a port of the drive device has been connected to the port.

### (Supplementary Note 6)

In the drive device according to Supplementary Note 5, there may further be provided the control unit configured to, in the case that the model determination unit has determined that the second correspondence relationship does not coincide with the correspondence relationship indicated by the second correspondence relationship information, carry out the control to issue the notification to the user. In accordance with such a configuration, in the case that the electric actuator that is not intended to be connected to the port is connected to that port, the notification will be issued to the user, and therefore, the user can be made to recognize that a mistaken electric actuator has been connected to that port.

### (Supplementary Note 7)

In the drive device according to Supplementary Note 5, there may further be provided the model information updating unit configured to, in the case that the model determination unit has determined that the second correspondence relationship does not coincide with the correspondence relationship indicated by the second correspondence relationship information, cause the model information storage unit to store, as the second correspondence relationship information, the information indicating the second correspondence relationship. In accordance with such a configuration, it is possible for the second correspondence relationship information of the model information storage unit to be updated in accordance with the electric actuator that has been connected to the port of the drive device.

### (Supplementary Note 8)

The drive system (10) equipped with the drive device according to any one of Supplementary Notes 4 to 7, the drive system including the acquisition unit (54) configured to, in the case that the model determination unit has determined that the second correspondence relationship does not coincide with the correspondence relationship indicated by the second correspondence relationship information, acquire, from the specification information storage unit (58, 64, 66) configured to store the specification information that is information concerning the specification of the electric actuator, the specification information corresponding to the electric actuator that has been connected to the drive device, and the setting unit (56) configured to set, in the drive device, the specification information that has been acquired by the acquisition unit. In accordance with such a configuration, it is possible to suppress malfunctioning of the drive device and the electric actuator.

### (Supplementary Note 9)

In the drive system according to Supplementary Note 8, the specification information storage unit may be disposed in the electric actuator. In accordance with such a configuration, it is possible to suppress malfunctioning of the drive device and the electric actuator.

### (Supplementary Note 10)

In the drive system according to Supplementary Note 8, the specification information storage unit may be disposed in the drive device. In accordance with such a configuration, it is possible to suppress malfunctioning of the drive device and the electric actuator.

### (Supplementary Note 11)

In the drive system according to Supplementary Note 8, the acquisition unit, the setting unit, and the specification information storage unit may be provided in the setting device (48) configured to be connected to the drive device. In accordance with such a configuration, it is possible to suppress malfunctioning of the drive device and the electric actuator.

### (Supplementary Note 12)

The determination method of determining the electric actuator that has been connected to the drive device that drives the electric actuator to which unique identification information different for each individual is assigned, the determination method including the individual information storage step of causing the individual information storage unit to store, as the first correspondence relationship information, the information indicating the correspondence relationship between the port of the drive device and the unique identification information of the electric actuator to be connected to the port, and the individual determination step in which, when the electric actuator is connected to the port, the individual determination unit determines whether or not the first correspondence relationship, which is the correspondence relationship between the port and the unique identification information of the electric actuator that has been connected to the port, coincides with the correspondence relationship indicated by the first correspondence relationship information. In accordance with such a configuration, it is possible to determine that an electric actuator that is not intended to be connected to a port of the drive device has been connected to the port.

### (Supplementary Note 13)

In the determination method according to Supplementary Note 12, there may further be provided the control step in which, in the case that the individual determination unit has determined that the first correspondence relationship does not coincide with the correspondence relationship indicated by the first correspondence relationship information, the control unit carries out the control to issue the notification to the user. In accordance with such a configuration, in the case that the electric actuator that is not intended to be connected to the port is connected to that port, the notification will be issued to the user, and therefore, the user can be made to recognize that a mistaken electric actuator has been connected to that port.

### (Supplementary Note 14)

In the determination method according to Supplementary Note 12, there may further be provided the individual information updating step in which, in the case that the individual determination unit has determined that the first correspondence relationship does not coincide with the correspondence relationship indicated by the first correspondence relationship information, the individual information updating unit causes the individual information storage unit to store, as the first correspondence relationship information, the information indicating the first correspondence relationship. In accordance with such a configuration, it is possible for the first correspondence relationship information of the individual information storage unit to be updated in accordance with the electric actuator that has been connected to the port of the drive device.

### (Supplementary Note 15)

In the determination method according to Supplementary Note 14, the electric actuator may be assigned model identification information different for each model, and there may further be provided the model information storage step of causing the model information storage unit to store, as the second correspondence relationship information, the information indicating the correspondence relationship between the port and the model identification information of the electric actuator to be connected to the port, the model determination step in which, when the electric actuator is connected to the port, the model determination unit determines whether or not the second correspondence relationship, which is the correspondence relationship between the port and the model identification information of the electric actuator that has been connected to the port, coincides with the correspondence relationship indicated by the second correspondence relationship information, and the model information updating step in which, in the case that the model determination unit has determined that the second correspondence relationship does not coincide with the correspondence relationship indicated by the second correspondence relationship information, the model information updating unit causes the model information storage unit to store, as the second correspondence relationship information, the information indicating the second correspondence relationship. In accordance with such a configuration, it is possible for the second correspondence relationship information of the model information storage unit to be updated in accordance with the electric actuator that has been connected to the port of the drive device.

### (Supplementary Note 16)

In the determination method of determining the electric actuator that has been connected to the drive device that drives the electric actuator to which the model identification information different for each model is assigned, the determination method may include the model information storage step of causing the model information storage unit to store, as the second correspondence relationship information, the information indicating the correspondence relationship between the port of the drive device and the model identification information of the electric actuator to be connected to the port, and the model determination step in which, when the electric actuator is connected to the port, the model determination unit determines whether or not the second correspondence relationship, which is the correspondence relationship between the port and the model identification information of the electric actuator that has been connected to the port, coincides with the correspondence relationship indicated by the second correspondence relationship information. In accordance with such a configuration, it is possible to determine that an electric actuator that is not intended to be connected to a port of the drive device has been connected to the port.

### (Supplementary Note 17)

In the determination method according to Supplementary Note 16, there may further be provided the control step in which, in the case that the model determination unit has determined that the second correspondence relationship does not coincide with the correspondence relationship indicated by the second correspondence relationship information, the control unit carries out the control to issue the notification to the user. In accordance with such a configuration, in the case that the electric actuator that is not intended to be connected to the port is connected to that port, the notification will be issued to the user, and therefore, the user can be made to recognize that a mistaken electric actuator has been connected to that port.

### (Supplementary Note 18)

In the determination method according to Supplementary Note 16, there may further be provided the model information updating step in which, in the case that the model determination unit has determined that the second correspondence relationship does not coincide with the correspondence relationship indicated by the second correspondence relationship information, the model information updating unit causes the model information storage unit to store, as the second correspondence relationship information, the information indicating the second correspondence relationship. In accordance with such a configuration, it is possible for the second correspondence relationship information of the model information storage unit to be updated in accordance with the electric actuator that has been connected to the port of the drive device.

### (Supplementary Note 19)

The determination method of determining the electric actuator that has been connected to the drive device included in the drive system according to Supplementary Note 8, the determination method including the acquisition step in which, in the case that the model determination unit has determined that the second correspondence relationship does not coincide with the correspondence relationship indicated by the second correspondence relationship information, the acquisition unit acquires, from the specification information storage unit, the specification information corresponding to the electric actuator that has been connected to the drive device, and the setting step in which the setting unit sets, in the drive device, the specification information that has been acquired by the acquisition unit. In accordance with such a configuration, it is possible to suppress malfunctioning of the drive device and the electric actuator.

### (Supplementary Note 20)

In the determination method according to Supplementary Note 19, in the acquisition step, the acquisition unit may acquire the specification information from the specification information storage unit that is provided in the electric actuator. In accordance with such a configuration, it is possible to suppress malfunctioning of the drive device and the electric actuator.

### (Supplementary Note 21)

In the determination method according to Supplementary Note 19, in the acquisition step, the acquisition unit may acquire the specification information from the specification information storage unit that is provided in the drive device. In accordance with such a configuration, it is possible to suppress malfunctioning of the drive device and the electric actuator.

### (Supplementary Note 22)

In the determination method according to Supplementary Note 19, the drive system may be equipped with the setting device including the acquisition unit, the setting unit, and the specification information storage unit, and in the acquisition step, the acquisition unit that is provided in the setting device may acquire the specification information from the specification information storage unit that is provided in the setting device. In accordance with such a configuration, it is possible to suppress malfunctioning of the drive device and the electric actuator.

### (Supplementary Note 23)

The program for causing the computer to execute the determination method according to any one of Supplementary Notes 12 to 18. In accordance with such a configuration, it is possible to determine that an electric actuator that is not intended to be connected to a port of the drive device has been connected to the port.

### (Supplementary Note 24)

The computer-readable non-transitory storage medium in which the program according to Supplementary Note 23 is stored. In accordance with such a configuration, it is possible to determine that an electric actuator that is not intended to be connected to a port of the drive device has been connected to the port.

## Claims

1. A drive device (14) that drives an electric actuator (12) to which unique identification information different for each individual is assigned, the drive device comprising:
an individual information storage unit (40) configured to store, as first correspondence relationship information, information indicating a correspondence relationship between a port (22) of the drive device and the unique identification information of the electric actuator to be connected to the port; and
an individual determination unit (34) configured to, when the electric actuator is connected to the port, determine whether or not a first correspondence relationship, which is the correspondence relationship between the port and the unique identification information of the electric actuator that has been connected to the port, coincides with the correspondence relationship indicated by the first correspondence relationship information.

2. The drive device according to claim 1, further comprising a control unit (38) configured to, in a case that the individual determination unit has determined that the first correspondence relationship does not coincide with the correspondence relationship indicated by the first correspondence relationship information, carry out a control to issue a notification to a user.

3. The drive device according to claim 1, further comprising an individual information updating unit (50) configured to, in a case that the individual determination unit has determined that the first correspondence relationship does not coincide with the correspondence relationship indicated by the first correspondence relationship information, cause the individual information storage unit to store, as the first correspondence relationship information, information indicating the first correspondence relationship.

4. The drive device according to claim 3, wherein the electric actuator is assigned model identification information different for each model, and further comprising:
a model information storage unit (42) configured to store, as second correspondence relationship information, information indicating a correspondence relationship between the port and the model identification information of the electric actuator to be connected to the port;
a model determination unit (36) configured to, when the electric actuator is connected to the port, determine whether or not a second correspondence relationship, which is the correspondence relationship between the port and the model identification information of the electric actuator that has been connected to the port, coincides with the correspondence relationship indicated by the second correspondence relationship information; and
a model information updating unit (52) configured to, in a case that the model determination unit has determined that the second correspondence relationship does not coincide with the correspondence relationship indicated by the second correspondence relationship information, cause the model information storage unit to store, as the second correspondence relationship information, information indicating the second correspondence relationship.

5. A drive device that drives an electric actuator to which model identification information different for each model is assigned, the drive device comprising:
a model information storage unit configured to store, as second correspondence relationship information, information indicating a correspondence relationship between a port of the drive device and the model identification information of the electric actuator to be connected to the port; and
a model determination unit configured to, when the electric actuator is connected to the port, determine whether or not a second correspondence relationship, which is the correspondence relationship between the port and the model identification information of the electric actuator that has been connected to the port, coincides with the correspondence relationship indicated by the second correspondence relationship information.

6. The drive device according to claim 5, further comprising a control unit configured to, in a case that the model determination unit has determined that the second correspondence relationship does not coincide with the correspondence relationship indicated by the second correspondence relationship information, carry out a control to issue a notification to a user.

7. The drive device according to claim 5, further comprising a model information updating unit configured to, in a case that the model determination unit has determined that the second correspondence relationship does not coincide with the correspondence relationship indicated by the second correspondence relationship information, cause the model information storage unit to store, as the second correspondence relationship information, information indicating the second correspondence relationship.

8. A drive system equipped with the drive device according to any one of claims 4 to 7, the drive system comprising:
an acquisition unit (54) configured to, in a case that the model determination unit has determined that the second correspondence relationship does not coincide with the correspondence relationship indicated by the second correspondence relationship information, acquire, from a specification information storage unit (58, 64, 66) configured to store specification information that is information concerning a specification of the electric actuator, specification information corresponding to the electric actuator that has been connected to the drive device; and
a setting unit (56) configured to set, in the drive device, the specification information that has been acquired by the acquisition unit.

9. The drive system according to claim 8, wherein the specification information storage unit is disposed in the electric actuator.

10. The drive system according to claim 8, wherein the specification information storage unit is disposed in the drive device.

11. The drive system according to claim 8, wherein the acquisition unit, the setting unit, and the specification information storage unit are provided in a setting device (48) configured to be connected to the drive device.

12. A determination method of determining an electric actuator that has been connected to a drive device that drives an electric actuator to which unique identification information different for each individual is assigned, the determination method comprising:
an individual information storage step of causing an individual information storage unit to store, as first correspondence relationship information, information indicating a correspondence relationship between a port of the drive device and the unique identification information of the electric actuator to be connected to the port; and
an individual determination step in which, when the electric actuator is connected to the port, an individual determination unit determines whether or not a first correspondence relationship, which is the correspondence relationship between the port and the unique identification information of the electric actuator that has been connected to the port, coincides with the correspondence relationship indicated by the first correspondence relationship information.

13. The determination method according to claim 12, further comprising a control step in which, in a case that the individual determination unit has determined that the first correspondence relationship does not coincide with the correspondence relationship indicated by the first correspondence relationship information, a control unit carries out a control to issue a notification to a user.

14. The determination method according to claim 12, further comprising an individual information updating step in which, in a case that the individual determination unit has determined that the first correspondence relationship does not coincide with the correspondence relationship indicated by the first correspondence relationship information, an individual information updating unit causes the individual information storage unit to store, as the first correspondence relationship information, information indicating the first correspondence relationship.

15. The determination method according to claim 14, wherein the electric actuator is assigned model identification information different for each model, and further comprising:
a model information storage step of causing a model information storage unit to store, as second correspondence relationship information, information indicating a correspondence relationship between the port and the model identification information of the electric actuator to be connected to the port;
a model determination step in which, when the electric actuator is connected to the port, a model determination unit determines whether or not a second correspondence relationship, which is the correspondence relationship between the port and the model identification information of the electric actuator that has been connected to the port, coincides with the correspondence relationship indicated by the second correspondence relationship information; and
a model information updating step in which, in a case that the model determination unit has determined that the second correspondence relationship does not coincide with the correspondence relationship indicated by the second correspondence relationship information, a model information updating unit causes the model information storage unit to store, as the second correspondence relationship information, information indicating the second correspondence relationship.

16. A determination method of determining an electric actuator that has been connected to a drive device that drives an electric actuator to which model identification information different for each model is assigned, the determination method comprising:
a model information storage step of causing a model information storage unit to store, as second correspondence relationship information, information indicating a correspondence relationship between a port of the drive device and the model identification information of the electric actuator to be connected to the port; and
a model determination step in which, when the electric actuator is connected to the port, a model determination unit determines whether or not a second correspondence relationship, which is the correspondence relationship between the port and the model identification information of the electric actuator that has been connected to the port, coincides with the correspondence relationship indicated by the second correspondence relationship information.

17. The determination method according to claim 16, further comprising a control step in which, in a case that the model determination unit has determined that the second correspondence relationship does not coincide with the correspondence relationship indicated by the second correspondence relationship information, a control unit carries out a control to issue a notification to a user.

18. The determination method according to claim 16, further comprising a model information updating step in which, in a case that the model determination unit has determined that the second correspondence relationship does not coincide with the correspondence relationship indicated by the second correspondence relationship information, a model information updating unit causes the model information storage unit to store, as the second correspondence relationship information, information indicating the second correspondence relationship.

19. A determination method of determining the electric actuator that has been connected to the drive device included in the drive system according to claim 8, the determination method comprising:
an acquisition step in which, in the case that the model determination unit has determined that the second correspondence relationship does not coincide with the correspondence relationship indicated by the second correspondence relationship information, the acquisition unit acquires, from the specification information storage unit, the specification information corresponding to the electric actuator that has been connected to the drive device; and
a setting step in which the setting unit sets, in the drive device, the specification information that has been acquired by the acquisition unit.

20. The determination method according to claim 19, wherein, in the acquisition step, the acquisition unit acquires the specification information from the specification information storage unit that is provided in the electric actuator.

21. The determination method according to claim 19, wherein, in the acquisition step, the acquisition unit acquires the specification information from the specification information storage unit that is provided in the drive device.

22. The determination method according to claim 19, wherein:
the drive system is equipped with a setting device comprising the acquisition unit, the setting unit, and the specification information storage unit; and
in the acquisition step, the acquisition unit that is provided in the setting device acquires the specification information from the specification information storage unit that is provided in the setting device.

23. A program for causing a computer to execute the determination method according to any one of claims 12 to 18.

24. A computer-readable non-transitory storage medium in which the program according to claim 23 is stored.
